# EUROPEAN PATENT SPECIFICATION

(11) **EP 1 945 828 B1**
(45) Date of publication and mention of the grant of the patent: **10.07.2013**
(21) Application number: 06799824.5
(22) Date of filing: 02.10.2006
(51) Int. Cl.: C23C 4/04, C23C 4/08, C23C 28/02, C23C 30/00, F16D 65/12, B32B 15/01, C22C 19/00, C22C 19/05, C22C 19/07, C22C 27/04, C22C 21/02, C22C 37/10, C22C 19/03

(54) **WEAR RESISTANT COATED VEHICLE COMPONENT AND VEHICLE**
VERSCHLEISSFESTES BESCHICHTETES FAHRZEUGBAUTEIL UND FAHRZEUG
COMPOSANT DE VÉHICULE REVÊTU RÉSISTANT À L'USURE ET VÉHICULE

(30) Priority: 13.10.2005 SE 0502270
(43) Date of publication of application: 23.07.2008
(73) Proprietor: Scania CV AB, 151 87 Södertälje (SE)
(72) Inventor: STENFORS, Sven-Eric, S-122 37 Enskede (SE); BERGSTRÖM, Magnus, S-133 38 Saltsjöbaden (SE); ANDERSSON, Henrik, S-181 31 Lidingö (SE)
(74) Representative: Sjögren Paulsson, Stina
(86) International application number: PCT/SE2006/050364
(87) International publication number: WO 2007/043961

(56) References cited:
- EP-A1- 0 769 568
- WO-A1-92/08909
- WO-A1-92/08909
- WO-A1-03/104513
- WO-A1-03/104513
- DE-A1- 2 545 242
- DE-A1- 2 545 242
- GB-A- 2 073 248
- US-A- 3 322 515
- US-A- 4 039 318

## Description

### TECHNICAL FIELD OF THE INVENTION

The present invention relates to a wear resistant, coated, substantially metallic, vehicle component including a working face exerted to relative movement friction wear. The invention also relates to a vehicle comprising at least one such vehicle component.

### BACKGROUND OF THE INVENTION

Typical vehicle components for application of the invention are eg brake rotors, such a rotor having a disc-shaped portion comprising working face portions, said working face portions being exerted to friction wear during braking.

Prior art components are available, which have disc-shaped portions of the same substantially metallic material as the main part of the component, eg aluminium, an aluminium alloy or a cast iron alloy, the working face or surface also being of the same material. In order to extend the lifetime of such components, attempts have been made to coat the working face with still more wear resistant materials. Such attempts, e g as described in US Patent No. 4 290 510 and US Patent No. 4 180 622, have employed very hard ceramic materials. Such coatings, however, are associated with brittleness and/or structural changes and, thus, cracking and/or loss of wear resistant properties to a severe extent. Further, described in WO 03/104 513 are components of the above referenced kind having a top coating comprising about 99 % or more by weight molybdenum applied to a multialloy bond coating, eg an iron-chromium-aluminium-nickel-yttrium alloy. Such combinations have under severely corrosive conditions proved to allow corrosion to occur on the base material at the coating interface, a certain porosity occurring in the coating.

Other components that are provided with top and bond coatings are shown in DE 2545242, GB 2073248 and EPφ769568.

Therefore, an object of the present invention is to provide a vehicle component with a coating, which is ductile and prevents cracking, does not undergo structural changes during use and in addition to this provides a fully corrosion-proof metallic dual-layer coating, sealing the component basic material even if a certain porosity occurs in the top coating.

A further object of the present invention is to provide components with improved wear resistance.

Yet a further object of the present invention is to provide a vehicle component with a coating which is non-porous in order to resist corrosion, primarily in the coating/base material interface.

Yet another object of the present invention is to improve the protection of the coating against undesired damage and thereby further extending the useful life of the vehicle component.

### SUMMARY OF THE INVENTION

The object of the present invention is obtained by a wear resistant, coated vehicle component according to the accompanying claim 1, and a vehicle according to claim 14 comprising at least one such vehicle component.

Further advantages are obtained by what is specified in the respective dependent claims.

Advantages and achievements of the present invention according to the claims are described below.

### BRIEF DESCRIPTION OF THE DRAWINGS

The invention will be further described by way of example with reference to the accompanying diagrammatic drawing in which:

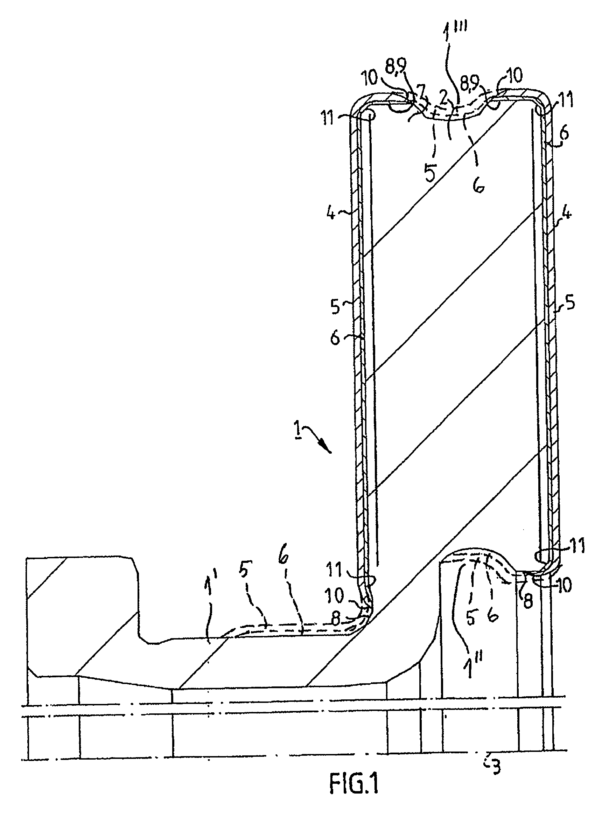

Fig. 1 schematically shows an axial section of a brake disc according to a first embodiment of a wear resistant coated vehicle component according to the invention.

### DETAILED DESCRIPTION OF EMBODIMENTS

In the following description and claims all percentages given for elements in the alloys specified are given as percentage by weight.

In Fig. 1, 1 designates a brake disc component according to the invention, said brake disc having a disc-shaped part 2 with a main extension plane substantially perpendicular to the axial direction 3 of the brake disc component. The disc-shaped part 2 comprises at least one working face 4 arranged and adapted to be exerted to relative movement friction wear, normally by means of a vehicle brake pad (not shown) being applied against a working face and pressed against said working face in a braking action, said working face rotating. In the embodiment shown, there are two working faces but there are brake disc components having two or more disc-shaped parts and, thus more than two working faces 4.

According to the invention the working face is formed by a wear resistant top coating 5 made of more than 50 % and less than 80 % molybdenum, the balance being chromium and normal impurities.

According to typical embodiments the top coating comprises more than 50 % and less than 80 % molybdenum, the balance being at least one element taken from said first group and normal impurities, including iron when applicable.

According to typical embodiments the top coating comprises, apart from normal impurities, including iron, when applicable, more than 50 % and less than 80% molybdenum, the balance being chromium or at least two of the elements taken from said first group, said two elements preferably being chromium and nickel.

According to embodiments preferred in certain cases the top coating alloy has a liquidus temperature, i.e. a temperature at which the alloy starts to melt, which is considerably lower than that of 99 % or more by weight molybdenum, preferably a liquidus temperature being lower than 60 % of that of 99% or more by weight molybdenium liquidus temperature, such a considerably lower liquidus temperature providing a fully or almost fully liquid alloy leaving the thermospray arrangement promoting the creation of a non-porous top coating layer.

The thickness of the top coating 5 is about 25 to 600 µm, preferably about 300 µm.

Further, a bond coating 6 is applied to the base material of the component to bond the top coating to the base material. The bond coating comprises about 90-95 % nickel and about 5-10 % aluminium and normal impurities.

Typically the bond coating has a liquidus temperature below about 1600°C, preferably below 1500°C, for providing a fully liquid alloy leaving the thermospray arrangement and promoting the creation of a fully diffusion tight and sealing bond coating.

The base material in the above referenced brake disc embodiment may be eg an aluminium alloy, eg the US standard alloy A 356 or the Swedish standard alloy SIS 4245 comprising, mainly, 7 % silicon and the balance aluminium, or a cast iron alloy, eg a standard grey cast iron alloy comprising about 3-3,7 % carbon, 2,1- 2,6 % silicon, 0,5-0,8 manganese, the balance substantially iron. Of course other aluminium alloys, eg standard alloys comprising 5-20 % aluminium, and other cast iron alloys may be used.

According to an embodiment the thickness of the bond coating is about 0-100 µm, preferably about 50 µm.

Further, according to preferred embodiments both the top coating and the bond coating are applied by a thermal spray process. However, other known processes for applying the coating/-s may be used.

Furthermore, it is often essential to the invention that the top coating and, when applicable, the bond coating are finished or terminated on a component surface or face 8, which is not identical to the working surface of the component. According to one embodiment, the top coating and the bond coating end substantially perpendicular to the working face plane, eg as can be seen in Fig. 1 where the respective coatings are finished on the cylindrical peripheral surface 9 of the disc-shaped part 2 of the brake disc. This is in order not to expose the end face 10 of the coatings to corrosion etc on the working face or at the peripheral edge 11 of the working face. Such exposure may damage at least parts of the coatings due to high working temperatures etc of the coatings.

It is of course also within the invention to end the top coating and bond coating on another surface on a vehicle component other than a surface substantially perpendicular to the working face plane. In an embodiment where a working face is adjacent to a chamfered edge surface forming an angle to the working face, it may be suitable to end the coatings on the chamfered edge surface adjacent to the working surface. Further, it may in some cases be advantageous to let the coatings end even more distant in relation to the working face, upon which the coatings are applied, inter alia to decrease the coating end temperature level generally. Such embodiments are illustrated with dashed lines in Fig. 1, the dual-layer coating 5, 6 ending on the neck 1' of the brake disc and in a ventilated groove-like space 1", respectively, in the central axis part of the brake disc and in a ventilated peripheral groove-like space 1"' of the peripheral surface of the component, such groove-like spaces 1", 1"' often being ventilated by means of protruding wings or protrusions, not shown, to create a turbulent air flow. Preferred are embodiments according to which the dual-larger coatings, if possible, meet each other, as indicated at the peripheral surface 9, so that no ends at all are exposed. Of course, this also goes for other components than brake discs. Thus, finishing portions of the dual-layer coating should be minimized by letting the coatings from separate working faces meet, if practical or possible.

Described here as an example is a brake disc. However, coatings according to the invention may be applied to other vehicle components, e.g. components being made of an aluminium alloy or a cast iron alloy as a base material and preferably being manufactured by an initial casting process. Examples of such components where the technical features according to the claimed invention are particularly advantageous are, besides brake discs, clutch components, crankshafts and flywheels. The technical features according to the claimed are however advantageous also for other vehicle components such as cast components in valve systems, gear box components, spring components and gear-wheel components.

### Comparative Example 1

A brake disc cast from an Al Si7 aluminium alloy was, as far as the two working faces were concerned, coated with a standard bond coating and a top coating of 99 % molybdenum. The coatings were applied by a plasma spray process. The thickness of the bond coating was about 50 µm and the thickness of the top coating was about 310 µm.

Retardation tests showed that the friction properties of the top coating using ordinary vehicle brake pads corresponded substantially to those of the base material. Further optimisation may be made.

### Comparative Example 2

As part of a corrosion test for combinations of top coatings and bond coatings, a brake disc portion cast from a standard grey cast iron base alloy comprising about 3,7 % carbon, 1,5 % silicon, 0,6 % manganese, 0,5 % copper etc coated by thermo-spraying with a bond coating comprising about 95 % nickel and about 5 % aluminium and a top coating comprising about 99 % molybdenum was treated in an accelerated corrosion test including salt water for, totally, 12 weeks. The thickness of the two layers were about 150 and 300 µm respectively.

In such a test un-coated cast iron will corrode most severely.

In contrast to some other samples in the test, the above referenced combination showed no corrosion at all of the grey cast iron base alloy.

Molybdenum has a thermal expansivity, which is smaller than the one of e.g. the intended base materials aluminium, aluminium alloys and cast iron alloys for components to be coated. This means that compressive stresses appear in the base material of the working face when the temperature is elevated during use of the component since the molybdenum coating restricts the expansion of the base material. This, in turn, restricts the formation of cracks in the working face base material. Further, the molybdenum top coating has a thermally insolating influence.

The top coatings has proven to be especially beneficial and applicable to a vehicle component, especially if it is a brake disc, a flywheel, a rotatable clutch component if the top coating has a surface roughness R_{z} ranging between 10 and 60 µm, where R_{z} is the Average Maximum Height of the surface profile. It is also advantageous if the top coating has a surface roughness Rₖ ranging between 2 and 15 µm, where Rₖ is the Core Roughness Depth; a surface roughness Rₚₖ ranging between 0.5 and 10.0 µm, where Rₚₖ is the Reduced Peak Height; a surface roughness Rᵥₖ ranging between 5 and 20 µm, where Rᵥₖ is the Reduced Valley Depth and a surface roughness Rₐ ranging between 2 and 10 µm, where Rₐ is the Arithmetical Mean Deviation. R_{z}, Rₖ, Rₚₖ, Rᵥₖ and Rₐ are all known surface roughness parameters known to a person skilled in the art and are therefore not described more in detail.

## Claims

1. A coated vehicle component made of a cast iron or an aluminium alloy base material and comprising at least one working face (4) arranged to be exerted to relative movement friction wear and comprising a wear resistant coating, **characterized by** a top coating (5) consisting of more than 50 % and less than 80 % molybdenum by weight, the balance being chromium and normal impurities, wherein the top coating being bonded to the base material by a sealing corrosion-proof bond coating consisting of 90-95 %, nickel and 5-10 % aluminium by weight and normal impurities.

2. A component according to claim 1, **characterized in that** the thickness of the top coating (5) is 25 to 600 µm.

3. A component according to claim 2, **characterized in that** the thickness of the top coating (5) is 300 µm.

4. A component according to claims 1-3, **characterized in that** the bond coating has a liquidus temperature below 1600°C, preferably below 1500°C.

5. A component according to anyone of claims 1 - 4, **characterized in that** the top coating (5) is finished or terminated on a surface (8, 9, 1', 1", 1"') forming an angle with the working face (4).

6. A component according to claim 5, **characterized in that** the surface (8, 9, 1', 1 ", 1"') is adjacent to the working face.

7. A component according to claim 5 or 6, **characterized in that** the surface is a chamfered edge surface (11).

8. A component according to claim 5 or 6, **characterized in that** the surface (8, 9, 1', 1", 1"') is substantially perpendicular to the working face (4).

9. A component according to anyone of claims 1-8, **characterized in that** the top coating is about 25-600 µm, preferably about 300 µm, thick.

10. A component according to anyone of claims 1-9, **characterized in that** the top coating has a surface roughness R_{z} ranging between 10 and 60 µm.

11. A component according to anyone of claims 1-10, **characterized in that** the top coating has a surface roughness Rₖ ranging between 2 and 15 µm.

12. A component according to anyone of claims 1-11, **characterized in that** the top coating has a surface roughness Rₚₖ ranging between 0.5 and 10.0 µm.

13. A component according to anyone of claims 1-12, **characterized in that** the component is a brake disc component, a clutch component or a flywheel.

14. A vehicle comprising at least one coated vehicle component according to anyone of claims 1-13.

## Patentansprüche

1. Beschichtete Fahrzeugkomponente, hergestellt aus einem Eisenguss- oder einem Aluminiumlegierungs-Grundmaterial und umfassend mindestens eine Arbeitsfläche (4), die dazu angeordnet ist, um einem Relativbewegungs-Reibverschleiß ausgesetzt zu werden, und umfassend eine verschleißbeständige Beschichtung, **gekennzeichnet durch** eine Oberbeschichtung (5), bestehend aus mehr als 50 Gewichts-% und weniger als 80 Gewichts-% Molybdän, wobei der Rest übliche Verunreinigungen sind, wobei die Oberbeschichtung mit dem Grundmaterial anhand einer dichtenden korrosionsbeständigen Haftbeschichtung verbunden ist, die aus 90 - 95 Gewichts-% Nickel und 5 - 10 Gewichts-% Aluminium und üblichen Verunreinigungen besteht.

2. Komponente nach Anspruch 1,
**dadurch gekennzeichnet, dass** die Dicke der Oberbeschichtung (5) 25 bis 600 µm beträgt.

3. Komponente nach Anspruch 2,
**dadurch gekennzeichnet, dass** die Dicke der Oberbeschichtung (5) 300 µm beträgt.

4. Komponente nach den Ansprüchen 1 bis 3,
**dadurch gekennzeichnet, dass** die Haftbeschichtung eine Liquidustemperatur unter 1600 °C aufweist, vorzugsweise unter 1500 °C.

5. Komponente nach einem der Ansprüche 1 bis 4,
**dadurch gekennzeichnet, dass** die Oberbeschichtung (5) an einer Oberfläche (8, 9, 1', 1", 1"') beendet oder abgeschlossen ist, die mit der Arbeitsfläche (4) einen Winkel einschließt.

6. Komponente nach Anspruch 5,
**dadurch gekennzeichnet, dass** die Oberfläche (8, 9, 1', 1", 1"') benachbart zu der Arbeitsfläche ist.

7. Komponente nach Anspruch 5 oder 6,
**dadurch gekennzeichnet, dass** die Oberfläche eine Oberfläche mit abgeschrägter Kante (11) ist.

8. Komponente nach Anspruch 5 oder 6,
**dadurch gekennzeichnet, dass** die Oberfläche (8, 9, 1', 1", 1"') im Wesentlichen senkrecht zu der Arbeitsfläche (4) ist.

9. Komponente nach einem der Ansprüche 1-8,
**dadurch gekennzeichnet, dass** die Oberbeschichtung etwa 25-600 µm, vorzugsweise etwa 300 µm dick ist.

10. Komponente nach einem der Ansprüche 1-9,
**dadurch gekennzeichnet, dass** die Oberbeschichtung eine Oberflächenrauigkeit R_{z} aufweist, die zwischen 10 und 60 µm liegt.

11. Komponente nach einem der Ansprüche 1-10,
**dadurch gekennzeichnet, dass** die Oberbeschichtung eine Oberflächenrauigkeit Rₖ aufweist, die zwischen 2 und 15 µm liegt.

12. Komponente nach einem der Ansprüche 1-11,
**dadurch gekennzeichnet, dass** die Oberbeschichtung eine Oberflächenrauigkeit Rₚₖ aufweist, die zwischen 0,5 und 10,0 µm liegt.

13. Komponente nach einem der Ansprüche 1-12,
**dadurch gekennzeichnet, dass** die Komponente eine Bremsscheibenkomponente, eine Kupplungskomponente oder ein Schwungrad ist.

14. Fahrzeug umfassend mindestens eine beschichtete Fahrzeugkomponente nach einem der Ansprüche 1-13.

## Revendications

1. Pièce de véhicule revêtue constituée d'un matériau à base de fonte ou d'un alliage d'aluminium et comprenant au moins une face de travail (4) destinée à être exposée à une usure par frottement due à un mouvement relatif et comprenant un revêtement résistant à l'usure, **caractérisée par** un revêtement de finition (5) constitué de plus de 50 % en poids et moins de 80 % en poids de molybdène, le restant étant constitué de chrome et d'impuretés normales, le revêtement de finition étant accroché au matériau de base par un revêtement d'accrochage et d'étanchement résistant à la corrosion, constitué de 90 à 95 % en poids de nickel et de 5 à 10 % en poids d'aluminium, et d'impuretés normales.

2. Pièce selon la revendication 1, **caractérisée en ce que** l'épaisseur du revêtement de finition (5) est de 25 à 600 µm.

3. Pièce selon la revendication 2, **caractérisée en ce que** l'épaisseur du revêtement de finition (5) est de 300 µm.

4. Pièce selon les revendications 1 à 3, **caractérisée en ce que** le revêtement d'accrochage a une température de liquidus inférieure à 1600°C, de préférence inférieure à 1500°C.

5. Pièce selon l'une quelconque des revendications 1 à 4, **caractérisée en ce que** le revêtement de finition (5) est fini ou terminé sur une surface (8, 9, 1', 1", 1"') formant un angle avec la face de travail (4).

6. Pièce selon la revendication 5, **caractérisée en ce que** la surface (8, 9, 1', 1", 1"') est adjacente à la face de travail.

7. Pièce selon la revendication 5 ou 6, **caractérisée en ce que** la surface est une surface de bord chanfreinée (11).

8. Pièce selon la revendication 5 ou 6, **caractérisée en ce que** la surface (8, 9, 1', 1", 1"') est essentiellement perpendiculaire à la face de travail (4).

9. Pièce selon l'une quelconque des revendications 1 à 8, **caractérisée en ce que** le revêtement de finition fait environ 25 à 600 µm, de préférence environ 300 µm, d'épaisseur.

10. Pièce selon l'une quelconque des revendications 1 à 9, **caractérisée en ce que** le revêtement de finition a une rugosité de surface R_{z} comprise entre 10 et 60 µm.

11. Pièce selon l'une quelconque des revendications 1 à 10, **caractérisée en ce que** le revêtement de finition a une rugosité de surface Rₖ comprise entre 2 et 15 µm.

12. Pièce selon l'une quelconque des revendications 1 à 11, **caractérisée en ce que** le revêtement de finition a une rugosité de surface Rₚₖ comprise entre 0,5 et 10,0 µm.

13. Pièce selon l'une quelconque des revendications 1 à 12, **caractérisée en ce que** la pièce est une pièce de disque de frein, une pièce d'embrayage ou un volant.

14. Véhicule comprenant au moins une pièce de véhicule revêtue selon l'une quelconque des revendications 1 à 13.
